# EUROPEAN PATENT SPECIFICATION

(11) **EP 0 760 214 B1**
(45) Date of publication and mention of the grant of the patent: **23.05.2001**
(21) Application number: 95202362.0
(22) Date of filing: 01.09.1995
(51) Int. Cl.: A23L 3/04, A23L 3/18, A23B 7/005

(54) **Apparatus and method for combined blanching and pasteurising**
Vorrichtung und Verfahren zur kombinierten Blanchierung und Pasteurisierung
Installation et méthode pour combiner le blanchiment et la pasteurisation

(43) Date of publication of application: 05.03.1997
(73) Proprietor: SOCIETE DES PRODUITS NESTLE S.A., 1800 Vevey (CH)
(72) Inventor: Askman, Lars, S-26050 Billesholm (SE); Leonhardt, Werner, S-265 31 Astorp (SE)
(74) Representative: Pate, Frederick George

(56) References cited:
- FR-A- 2 489 097

## Description

The invention relates to an apparatus for combined blanching of a food product and pasteurising of a packed food product. The invention also relates to a process for combined blanching and pasteurising and to the use of steam from blanching for simultaneously pasteurising.

Blanching is used in preparation of food products such as filled and unfilled pasta in fresh form, noodles, gnoccies, vegetables etc. This is usually done to slightly cook or pre-cook the food product. Such food products are susceptible to bacterial action. It is well known that after packaging of a food product, in order to prolong the freshness of the food product, the food product can be subjected to a heat treatment i.e. a pasteurisation.

Separate blanchers and pasteurisers are known from the prior art.

FR-A-2 489 097 describes a process for the preservation of perishable porous foodstuffs (esp. mushrooms) by (a) contacting with an impregnating liquid containing a heat-coagulatable substance, (b) blanching to coagulate, (c) sealing in storage containers, and (d) heat treating the product by pasteurisation under acid conditions.

We have devised an apparatus, a process and a use which combine the concepts of blanching and pasteurising in one unit. A substantial energy saving is obtained which is relevant not only from a cost point of view but also from an environmental approach. An additional benefit from the combined blancher and pasteuriser is that the equipment requires considerably less space than a conventional separate blancher and pasteuriser. As a further advantage of the invention, less installations, electrical, water supply etc., are required.

Accordingly, the present invention provides an apparatus for combined blanching and pasteurising food products, the apparatus comprising
a blancher to blanch the food product in hot or boiling water or in steam therefrom,
a first conveyor to convey a food product through the water or steam in the blancher and out thereof, and
a second conveyor to convey the food product sealed in packages through steam from the hot or boiling water in the blancher to cause a pasteurisation of the packed food product.

To obtain an appropriate pasteurising of the blanched food product, it is sealed into packages. Suitable packages are packages comprising a lid welded onto tray, both parts being made of food acceptable plastic.

The apparatus according to the invention allows a simultaneous blanching and pasteurising within one unit. The first conveyor forwards food products to and out of the hot or boiling blanching water, or just passes them through the steam, while food products which have already been blanched and packed are being passed through the apparatus again for a further heat treatment, namely the pasteurisation. In this way, substantial heating, which is necessary for carrying out heat treatment in connection with the above-mentioned kind of food products, is eliminated. Limited addition of heat may be required as is discussed below.

The pasteurising steam temperature is conveniently controlled by varying additional steam injection. For some purposes it: is necessary to increase the temperature of the steam, e.g. when the temperature required for pasteurising is higher than that for blanching, or when the hot steam drops too much in temperature due to heat absorption from the surroundings. Alternatively, other heating means may be provided where appropriate.

It is preferred that the apparatus further comprises an exhaust-steam condenser to condense steam and recycle water and energy to the blancher. The condensation of steam leaving the combined blancher and pasteurising part is important in order to avoid vapour and humidity in the surrounding of the apparatus. Furthermore, the water in the blancher gradually disappears as a consequence of the evaporation of the water and water absorption of the food product being blanched. With this embodiment of the invention it is possible to save energy and water by recycling the water created when condensing the exhaust steam from the apparatus. After condensation the water will still have a high temperature, e.g. in the range of 60 to 80°C, and less heating of the water is necessary for it to be reintroduced into the blancher. Further energy savings can be obtained by increasing the temperature of any additional water, which is being supplied to the blancher, by passing the water through the exhaust-steam condenser.

Advantageously, the second conveyor, forwarding the packed food products through the pasteurising part of the apparatus, is positioned substantially above the hot or boiling water. This gives the best exploitation of the hot steam raising from the blancher. Additionally, the second conveyor may comprise a wire-mesh belt to allow the hot steam an access to the packed food material as direct as possible, and hence minimise energy loss. For the same reason, it should be aimed that no steam shielding elements are positioned between the second conveyor and the water in the blancher. A valuable advantage of this construction is that it gives a compact structure of the apparatus, and thus provides a less space demanding apparatus.

In another aspect, the invention relates to a process for combined blanching and pasteurising food products comprising
blanching the food product by conveying it through hot or boiling water or steam therefrom in a blancher and out thereof,
sealing the food product in packages, and
returning the package through steam from the hot or boiling water to cause a pasteurisation of the packed food product.

Advantageously, the process comprises supplying of additional steam. This is done to regulate the temperature of the pasteurising steam.

The best results are obtained when the blanching is carried out at 95° to 100°C for a period of 1 to 10 min, preferably 1 to 5 min, and the pasteurisation is carried out at 95° to 100°C for a period of 15 to 45 min. However, the suitable blanching and pasteurisation time and temperature will depend on the type of food product produced with this process. Furthermore, the pasteurisation time depends on the size and type of package used.

With the advantages discussed above the process according to the invention may comprise condensing of exhaust-steam and recycling of water and energy to the blancher. Heating additional water required for the blancher by benefiting of the heat exchange of the condenser is also favourable.

Further details of the process will be apparent from the discussion below of the drawings.

Finally, the invention also relates to the use of steam from blanching of food products in hot or boiling water or steam for simultaneously pasteurising packed food products within the same apparatus. An appropriate apparatus has the technical features as discussed above.

An embodiment of invention will now be described, by way of example only, with reference to the accompanying drawings in which,
Fig. 1 is a schematic illustration of the apparatus according to the invention and of its operation,

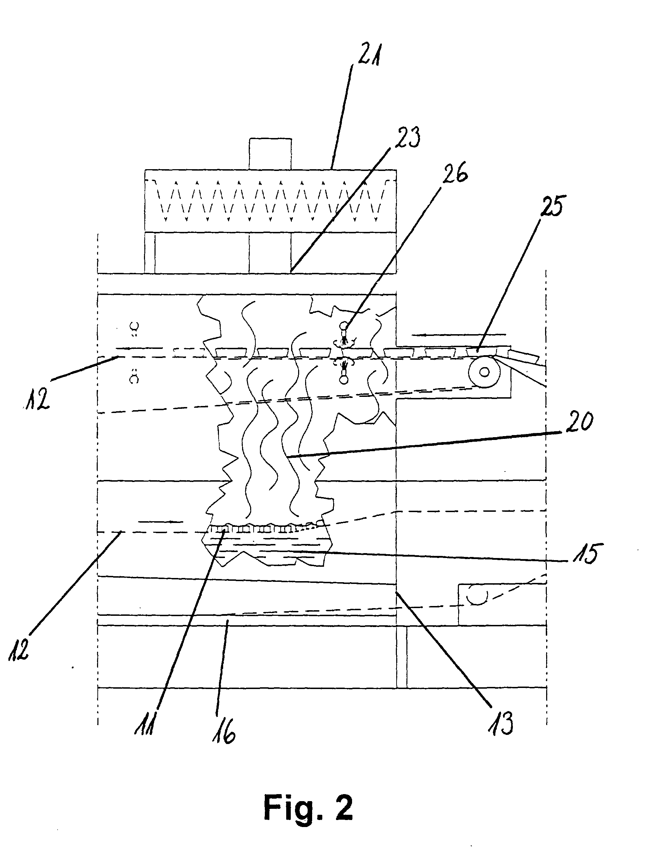

Fig. 2 is an enlarged schematic illustration of part of the apparatus according to the invention.

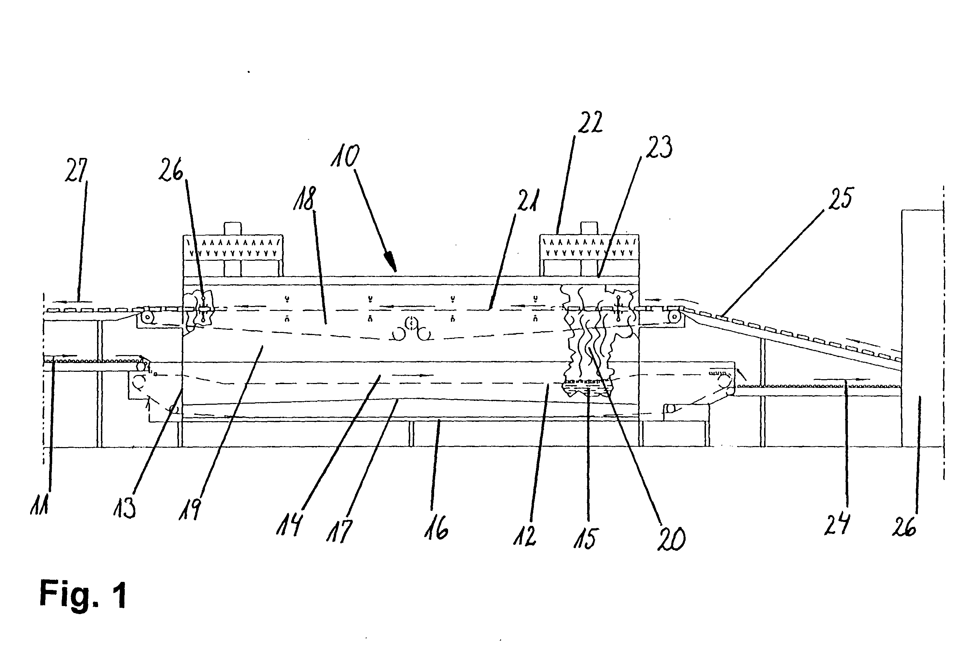

Fig. 1 shows an apparatus 10 for combined blanching and pasteurising of a food product. The apparatus comprises a housing 13 wherein a blancher 14 is mounted. The blancher 14 comprises a vessel 17 with water 15 heated by heating elements 16 adjacent to or positioned in the vessel. The heating elements 16 are connected to temperature control and regulation units not shown in the drawings. The apparatus further comprises a first conveyor 12 to convey a food product through the water 15 in the blancher 14 and out thereof again. Depending on what kind of product is being processed, the product may be passed partly through water or through the steam only. However, for most purposes the food product is passed fully through water during its passage through the blancher 14 on the first conveyor 12.

Above the blancher a pasteurising tunnel 18 is mounted within the housing 12. The lower part 19 of the pasteurising tunnel 18 communicates with the atmosphere above the blancher 14 so that steam 20 from the blancher 14 is allowed to pass as undisturbed and as directly as possible upwards to the tunnel 18 to cause a minimum energy loss. The lower part 19 of the tunnel 18 is preferably an open base. Alternatively, a grid base is provided in the pasteurising tunnel 18. This gives free passage of the steam raising from the water to the interior.

The apparatus 10 is provided with a second conveyor 21 to convey the packed food product through the tunnel 18 and the steam from the hot or boiling water 15 therein. This passage through the hot steam causes a pasteurisation of the packed food product. To get the appropriate pasteurisation the temperature and processing time means for regulation is provided. The temperature for the pasteurisation can be regulated by injector nozzles 26 injecting additional steam into the tunnel 18. Means for regulating the speed of the first and second conveyor are provided but not shown in the drawings.

The apparatus 10 is also provided with exhaust-steam condensers 22 positioned above the pasteurisation tunnel 18. The exhaust from the tunnel 18 is lead via an exhaust outlet 23 to the exhaust-steam condenser 22 which condenses steam and recycles water and energy to the blancher 14. During the blanching the water will gradually evaporate and be absorbed by the food products passed through the blancher. Additional water is therefore to be supplied, preferably at a temperature substantially corresponding to that of the water in the blancher. The heat from the condenser 22 can conveniently be used for heating of the water which is to be supplied to the blancher in order to keep up its water level.

The combined blanching and pasteurising is carried out in the following way: Small individual items 11, e.g. tortellinis, pieces of vegetables etc., are forwarded on a supply conveyor 13 and passed onto a first conveyor 12. The blancher 14 contains hot water at a temperature of approximately 98°C. The food items 11 are transported through the water by the first conveyor. At the out-feed end of blancher 14 the food items 11 are transported out of the blanching water 15 and onto another conveyor 24. Conveyor 24 transfers the blanched food items 11 to a dosage and package machinery 26 of any suitable type commercially available. For example, the food items 11 are dosed into packages of suitable size and type. The typical product weight per package is around 100-500 grams, and a typical package type is a plastic tray with a plastic lid welded onto the tray. The welding is watertight.

The packaged food items 11 are now ready to be pasteurised. This is done in the pasteurising tunnel 18 also called an "In-Pack-Pasteurisation-tunnel", IPP-tunnel. The atmosphere inside the tunnel 18 is hot and steamy due to the communication with the atmosphere above the blancher 14. Packages 25 with the food items 11 are passed through the tunnel 18 on the second conveyor 21, which preferably is a wire-mesh belt conveyor, from the in-feed end to the out-feed end of the tunnel 18. During the transportation through the heat inside the tunnel 18, the food items 11 contained in the packages 25 are exposed to the desired heat treatment, namely the pasteurisation. After leaving the tunnel 18 the packages 25 are subsequent transferred onto a downstream part 27 of the production line for further suitable handling. The hot steamy atmosphere in the tunnel 18 is created by the hot and steamy vapour raising from the hot blanching-water 15 and optionally maintained by small amounts of additional steam injected into the tunnel 18 through the injection nozzles 26. In this way, by combining blanching and pasteurisation in one apparatus, instead of carrying out the operations in separate equipment:, substantial energy saving is obtained.

## Claims

1. Apparatus for combined blanching and pasteurising food products, the apparatus comprising
a blancher to blanch the food product in hot or boiling water or in steam therefrom,
a first conveyor to convey a food product through the water or steam in the blancher and out thereof, and
a second conveyor to convey the food product sealed in packages through steam from the hot or boiling water in the blancher to cause a pasteurisation of the packed food product.

2. Apparatus according to claim 1, wherein the apparatus further comprises at least one steam injector to regulate the temperature in pasteurising steam.

3. Apparatus according to claims 1 and 2, wherein the apparatus further comprises an exhaust-steam condenser to condense steam and recycle water and energy to the blancher.

4. Apparatus according to any of claims 1 to 3, wherein additional water supplied to the blancher is heated by being passed through the exhaust-steam condenser.

5. Apparatus according to any of claims 1 to 4, wherein the second conveyor is positioned substantially above the hot or boiling water.

6. Apparatus according to any of claims 1 to 5, wherein the second conveyor comprises a wire-mesh belt.

7. Apparatus according to any of claims 1 to 6, wherein no steam shielding elements are positioned between the second conveyor and the water in the blancher.

8. Process for combined blanching and pasteurising food products comprising
blanching the food product by conveying it through hot or boiling water or steam therefrom in a blancher and out thereof,
sealing the food product in packages, and
returning the package through steam from the hot or boiling water to cause a pasteurisation of the packed food product.

9. Process according to claim 8, wherein additional steam is supplied to regulate the temperature of the pasteurising steam.

10. Process according to claims 8 and 9, wherein the blanching is carried out at 95° to 100°C for a period of 1 to 5 min and the pasteurisation is carried out at 95° to 100°C for a period of 15 to 45 min.

11. Process according to any of claims 8 to 10, wherein exhaust-steam is condensed and water and energy are recycled to the blancher.

12. Process according to claim 11, wherein additional water, which has been heated by the condensing of the steam, is supplied to the blancher.

13. Use of steam from blanching of food products in hot or boiling water or steam for simultaneously pasteurising packed food products within the same apparatus.

## Patentansprüche

1. Vorrichtung zum kombinierten Blanchieren und Pasteurisieren von Lebensmittelprodukten, wobei die vorrichtung
einen Blanchierer zum Blanchieren des Lebensmittelprodukts in heißem oder kochendem Wasser oder in Dampf davon,
eine erste Fördervorrichtung, um ein Lebensmittelprodukt durch das Wasser oder den Dampf in dem Blanchierer und daraus hinaus zu fördern,
eine zweite Fördervorrichtung, um das Lebensmittelprodukt, das in Packungen verschlossen ist, durch Dampf von dem heißen oder kochendem Wasser in dem Blanchierer zu fördern, um eine Pasteurisierung des verpackten Lebensmittelprodukts zu bewirken.

2. Vorrichtung nach Anspruch 1, bei der die Vorrichtung des weiteren zumindest einen Dampfeinleiter zum Regulieren der Temperatur des pasteurisierenden Dampfs aufweist.

3. Vorrichtung nach den Ansprüchen 1 und 2, bei der die Vorrichtung des weiteren einen Abgasdampfkondensator aufweist, um Dampf zu kondensieren und Wasser und Energie zu dem Blanchierer zurückzuführen.

4. Vorrichtung nach einem der Ansprüche 1 bis 3, bei der zusätzliches Wasser, das zu dem Blanchierer zugeführt wird, erwärmt wird, indem es durch den Abgasdampfkondensator geleitet wird.

5. Vorrichtung nach einem der Ansprüche 1 bis 4, bei der die zweite Fördervorrichtung im wesentlichen oberhalb des heißen oder kochenden Wassers angeordnet ist.

6. Vorrichtung nach einem der Ansprüche 1 bis 5, bei der die zweite Fördervorrichtung ein Drahtgitterband aufweist.

7. Vorrichtung nach einem der Ansprüche 1 bis 6, bei der keine dampfabschirmenden Elemente zwischen der zweiten Fördervorrichtung und dem Wasser in dem Blanchierer angeordnet sind.

8. Verfahren zum kombinierten Blanchieren und Pasteurisieren von Lebensmittelprodukten mit den folgenden Schritten:
Blanchieren des Lebensmittelprodukts, indem es durch heißes oder kochendes Wasser oder Dampf davon in einem Blanchierer und daraus hinaus gefördert wird,
Verschließen des Lebensmittelprodukts in Packungen, und
Zurückführen der Packungen durch Dampf von dem heißen oder kochenden Wasser, um eine Pasteurisierung von dem verpackten Lebensmittelprodukt zu bewirken.

9. Verfahren nach Anspruch 8, bei dem zusätzlicher Dampf zugeführt wird, um die Temperatur von dem pasteurisierenden Dampf zu regulieren.

10. Verfahren nach den Ansprüchen 8 und 9, bei dem das Blanchieren bei 95° bis 100°C für eine Zeitdauer von 1 bis 5 min ausgeführt wird, und die Pasteurisierung bei 95° bis 100°C für eine Zeitdauer von 15 bis 45 min ausgeführt wird.

11. Verfahren nach einem der Ansprüche 8 bis 10, bei dem Abgasdampf kondensiert wird, und Wasser und Energie zu dem Blanchierer zurückgeführt wird.

12. Verfahren nach Anspruch 11, bei dem zusätzliches Wasser, das bei dem Kondensieren von dem Dampf erwärmt wurde, zu dem Blanchierer zugeführt wird.

13. Verwendung von Dampf von dem Blanchieren von Lebensmittelprodukten in heißem oder kochenden Wasser oder Dampf zum gleichzeitigen Pasteurisieren verpackter Lebensmittelprodukte in der gleichen Vorrichtung.

## Revendications

1. Appareil pour le blanchiment et la pasteurisation combinés de produits alimentaires, l'appareil comprenant :
un dispositif de blanchiment pour blanchir le produit alimentaire dans de l'eau chaude ou bouillante ou de la vapeur provenant de celle-ci,
un premier transporteur pour transporter un produit alimentaire dans l'eau ou la vapeur dans le dispositif de blanchiment et hors de celui-ci, et
un deuxième transporteur pour transporter le produit alimentaire enfermé hermétiquement dans des emballages dans la vapeur provenant de l'eau chaude ou bouillante dans le dispositif de blanchiment pour provoquer une pasteurisation du produit alimentaire emballé.

2. Appareil selon la revendication 1, dans lequel l'appareil comprend également au moins un injecteur de vapeur pour régler la température de la vapeur de pasteurisation.

3. Appareil selon les revendications 1 et 2, dans lequel l'appareil comprend également un condenseur de vapeur d'échappement pour condenser la vapeur et recycler de l'eau et de l'énergie vers le dispositif de blanchiment.

4. Appareil selon l'une quelconque des revendications 1 à 3, dans lequel de l'eau supplémentaire distribuée au dispositif de blanchiment est chauffée en étant passée dans le condenseur de vapeur d'échappement.

5. Appareil selon l'une quelconque des revendications 1 à 4, dans lequel le deuxième transporteur est positionné sensiblement au-dessus de l'eau chaude ou bouillante.

6. Appareil selon l'une quelconque des revendications 1 à 5, dans lequel le deuxième transporteur comprend un tapis métallique.

7. Appareil selon l'une quelconque des revendications 1 à 6, dans lequel aucun élément faisant écran à la vapeur n'est positionné entre le deuxième transporteur et l'eau dans le dispositif de blanchiment.

8. Procédé pour le blanchiment et la pasteurisation combinés de produits alimentaires comprenant les opérations consistant à :
blanchir le produit alimentaire en le transportant dans de l'eau chaude ou bouillante ou de la vapeur provenant de celle-ci dans un dispositif de blanchiment et hors de celui-ci,
enfermer hermétiquement le produit alimentaire dans des emballages, et
ramener l'emballage dans la vapeur provenant de l'eau chaude ou bouillante pour provoquer une pasteurisation du produit alimentaire emballé.

9. Procédé selon la revendication 8, dans lequel de la vapeur supplémentaire est distribuée pour régler la température de la vapeur de pasteurisation.

10. Procédé selon les revendications 8 et 9, dans lequel le blanchiment est effectué à une température de 95°C à 100°C pendant une durée de 1 à 5 minutes et la pasteurisation est effectuée à une température de 95°C à 100°C pendant une durée de 15 à 45 minutes.

11. Procédé selon l'une quelconque des revendications 8 à 10, dans lequel la vapeur d'échappement est condensée et l'eau et l'énergie sont recyclées vers le dispositif de blanchiment.

12. Procédé selon la revendication 11, dans lequel de l'eau supplémentaire, qui a été chauffée par la condensation de la vapeur, est distribuée au dispositif de blanchiment.

13. Utilisation de vapeur provenant du blanchiment de produits alimentaires dans de l'eau chaude ou bouillante ou de la vapeur pour pasteuriser simultanément des produits alimentaires emballés, au sein du même appareil.
